(19) Europäisches Patentamt
European Patent Office
Office européen des brevets

(11) Publication number: **0 271 243 B1**

# (12) EUROPEAN PATENT SPECIFICATION

(45) Date of publication of patent specification: **30.10.91**

(51) Int. Cl.5: **C08F 214/26**, C08F 2/38, //(C08F214/26,216:14)

(21) Application number: **87310275.0**

(22) Date of filing: **20.11.87**

## (54) Tetrafluoroethylene polymerization process.

(30) Priority: **21.11.86 US 933616**

(43) Date of publication of application: **15.06.88 Bulletin 88/24**

(45) Publication of the grant of the patent: **30.10.91 Bulletin 91/44**

(84) Designated Contracting States: **DE FR GB IT NL**

(56) References cited:
**DE-A- 2 052 495**
**US-A- 3 066 122**

(73) Proprietor: **E.I. DU PONT DE NEMOURS AND COMPANY**
**1007 Market Street**
**Wilmington Delaware 19898(US)**

(72) Inventor: **Hahn, Harold Sonny**
**1511 Putnam Howe Drive**
**Belpre Ohio 45714(US)**
Inventor: **Mestemacher, Steven Alan**
**106 Wedgewood Place**
**Parkersburg West Virginia 26101(US)**
Inventor: **Olson, Allan Harold**
**157 N. Hills Drive**
**Parkersburg West Virginia 26101(US)**

(74) Representative: **Myerscough, Philip Boyd et al**
**J.A.Kemp & Co. 14, South Square Gray's Inn**
**London, WC1R 5EU(GB)**

EP 0 271 243 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the polymerization of tetrafluoroethylene (TFE) monomer with perfluoro(alkyl vinyl ether) monomer (PAVE) in a perfluorinated or partially fluorinated fluorocarbon solvent in the presence of an alkane ($C_1$-$C_3$) chain transfer agent.

Prior to this invention, TFE and PAVE monomers have been polymerized in the above-mentioned fluorocarbon solvents using, for example, methanol as chain transfer agent (see US-A-3 642 742). A chain transfer agent is desirable in the type of TFE polymerization described herein to alter the end groups of the resulting melt-processible TFE/PAVE copolymers and control molecular weight and molecular weight distribution. Without use of a chain transfer agent, said end groups tend to be unstable ones, such as -COF, -COOH and $-CF=CF_2$. On subjecting copolymers with these end groups to heat, the end groups tend to decompose or rearrange with release of gases such as $CO_2$ and/or HF. These gases cause bubbles in molded copolymer parts and, in addition, the HF is highly corrosive.

Methanol as a chain transfer agent has not been ideal. Methanol tends to be recycled with monomer, and it is difficult to sample and analyze for methanol when mixed with monomer. Therefore, it is hard to know how much methanol to add to the polymerization vessel to achieve the desired effect. In addition, the methanol acts to solubilize transient water and HE in the system, which results in corrosion of the polymerization equipment. Moreover, the methanol forms $-CH_2OH$ end groups in the copolymer which are themselves subject to attack by oxygen at extrusion temperatures with both release of HF and conversion of the $-CH_2OH$ end groups to unstable -COF end groups.

It has now been found that use of a $C_1$ to $C_3$ alkane as the chain transfer agent in place of methanol overcomes many of the problems associated with methanol while maintaining desirable molecular weight and molecular weight distribution control.

Use of a $C_1$ to $C_3$ alkane, i.e. methane, ethane or propane, has been found to have several advantages. For example, alkane concentration in the process can be controlled more effectively than methanol because alkanes can be more readily analyzed when mixed with monomer. The alkanes produce $-CH_3$ end groups, which are more thermally stable than $-CH_2OH$ groups. They are less corrosive due to the lower solubility of water and HF in the solvent. Finally, the $C_1$-$C_3$ alkanes aid in producing polymers of narrow molecular weight distribution index which is desirable in some end uses. This feature is unique when compared with a variety of other hydrocarbon chain transfer agents.

Specifically, this invention is a process for making a melt-processible tetrafluoroethylene copolymer which comprises polymerizing tetrafluoroethylene with at least one perfluoro(alkyl vinyl ether) comonomer of the formula $R_fO-CF=CF_2$ wherein Rf is perfluoroalkyl of 1-6 carbon atoms, in a liquid organic solvent selected from perfluorinated solvents and chlorofluoroalkane solvents in which each carbon atom has at least one fluorine atom attached thereto, at a temperature of between 30 °C and 75 °C and a pressure of between 0.1 and 6.9 MPa gauge (15 and 1000 psig) in the presence of a polymerization initiator and in the presence of a chain transfer agent wherein the chain transfer agent is methane, ethane, or propane. The resulting polymer can then be melt-shaped as desired.

The polymerization of tetrafluoroethylene with perfluoroalkyl vinyl ether comonomer is well known, having been described in a number of patents, such as US-A-3,642,742, which describes such polymerization being carried out in an organic liquid medium in the presence of certain chain transfer agents. The present invention involves the same process but uses a different chain transfer agent.

Suitable solvents for the process are perfluorinated solvents such as perfluorocyclobutane, perfluorodimethyl cyclobutane and perfluorocyclohexane. Preferred solvents are commercially available chlorofluoroalkanes and some chlorofluorohydroalkanes, having from 1-4 carbon atoms and preferably 1-2 carbon atoms in which each carbon atom is substituted by at least one fluorine atom. Said chlorofluoroalkanes may also contain a maximum of one hydrogen atom per carbon atom if the hydrogen is present only in the difluoromethyl grouping ($-CF_2H$). Suitable solvents should be liquid at polymerization conditions. Examples of preferred solvents are as follows: $CCl_2F_2$, $CCl_3F$, $CClF_2H$, $CCl_2FCCl_2F$, $CCl_2FCClF_2$ and $CClF_2CClF_2$. These compounds are sold under the trade names "Freon" 12, "Freon" 11, "Freon" 22, "Freon" 112, "Freon" 113 and "Freon" 114, respectively. The most preferred solvent is "Freon" 113.

One or more comonomers are copolymerized or terpolymerized with tetrafluoroethylene to produce a co- or ter-polymer.

Monomers which can be used are the perfluoro(alkyl vinyl ethers) having the general formula $CF_3(CF_2)_nOCF=CF_2$ where n is a cardinal number of 1-5, such as perfluoroethyl perfluorovinyl ether and perfluoropropyl perfluorovinyl ether.

Any suitable initiator for TFE nonaqueous polymerization can be used. It should be soluble in the fluorocarbon solvents, have high activity between 30 °C and 75 °C and be substantially nontelogenic. Also,

the initiators must give radicals which will result in stable end groups on the polymer chain. Fluorocarbon acyl peroxides are suitable initiators. Fluorocarbon acyl peroxides which are suitable for use in the process are represented by the formula

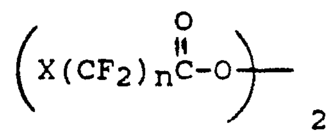

where X=H, Cl or F and n=1-10. The preferred initiator is bis(perfluoropropionyl) peroxide. A low temperature initiator must be used because the temperature of the polymerization system should not go over 75° C. Above 75° C, the rearrangement of the perfluovinyl ether occurs so much more rapidly that a greater number of chains are terminated in acid fluoride end groups than is normally desirable.

Carboxylic acid end groups in the polymer are termed "unstable end groups" because they decompose readily during fabrication of the polymer, giving rise to bubbles in the finished product. Other end groups such as vinyl and acid fluoride end groups are also included in the category of unstable end groups because they are readily converted to carboxylic acid end groups.

The existence and quantity of these end groups can be determined by the infrared spectrum generally obtained on compression molded films of about 0.25 mm (10 mils) thickness.

The term "specific melt viscosity" as used herein means the apparent melt viscosity as measured at 372° C under a shear stress of 6.5 pounds per square inch (45 kPa). Specific melt viscosity is determined by using a melt indexer of the type described in ASTM D-1238-52-T, modified for corrosion resistance by employing a cylinder, orifice, and a piston made of Stellite cobalt-chromium-tungsten alloy. The resin is charged to the 0.375 inch (.95 cm) I.D. cylinder which is held at 372° C ± 0.5° C, allowed to come to an equilibrium temperature during 5 minutes, and extruded through the 0.0825 inch (2 mm) diameter, 0.315 inch (8 mm) long orifice under a piston loading of 5000 grams. The specific melt viscosity in 0.1 Pas (poises) is calculated as 53,150 divided by the observed extrusion rate in grams per minute.

The specific melt viscosity of the copolymers will be below 1 x $10^6$ Pas (1 x $10^7$ poise) at 372° C to insure the melt-processible character of the product. The resulting copolymers are non-elastomeric and are useful as films, fibers and tubes for example.

As the examples will show, the melt viscosity and the molecular weight distribution index of the copolymers produced are very close to those of the same copolymer produced using methanol as chain transfer agent, thus showing that the $C_1$-$C_3$ alkanes are just as effective in terms of these criteria.

Moreover there were no unstable $-CH_2OH$ end groups in the polymer so made and only the expected number of -COF end groups (or COOH groups resulting from hydrolysis of -COF groups) from comonomer rearrangement were present. Most importantly, there was no change during extrusion of the number of -COF end groups present, which means that little, if any, HF was produced.

Molecular Weight Distribution Index (MWDI) is defined as $MV_{10}/MV_5$. $MV_5$ is the apparent melt viscosity in a high temperature melt viscometer, such as that made by F. F. Slocomb Co., Wilmington, DE. $MV_5$ is based on melt flow rate using 5000 g total mass while urging the melt through the orifice. The sample is kept in the viscometer at 372° C for 5 minutes before the flow is measured.

$MV_{10}$ is measured after $MV_5$, and is the melt flow rate using 833 g total mass, starting the measurement 10 minutes after the sample entered the viscometer.

The PPVE content of a copolymer is measured using infrared spectrometry on a compression molded film using absorbance at 993 $cm^{-1}$ as a measure of PPVE content and absorbance at 2353 $cm^{-1}$ as a measure of sample thickness. The ratio $A_{993}$:$A_{2353}$ is related to PPVE content of the polymer by means of a calibration curve using known copolymers. $F_{19}$ NMR is used as the primary standard for calibrating the reference films.

## EXAMPLES

### Comparison Experiment 1
### Experiment Using Methanol as Chain Transfer Agent

Into an evacuated, one liter, stainless steel, agitated pressure vessel were charged 830 ml of 1,2,2,trichloro-1,1,2-trifluoroethane ("Freon" 113), 30.6 grams perfluoropropyl-perfluorovinyl ether (PPVE), and 0.38 g methanol. The mixture was heated to 60° C and tetrafluoroethylene (TFE) was charged into the

vessel until 68 psig (470 kPa) pressure was obtained. Then 25 ml of dilute perfluoropropionyl peroxide initiator (3P) in "Freon" 113 (0.002 g/ml) was pumped into the vessel to start the reaction. After the start of the reaction, 3P initiator solution (0.002 g/ml) was pumped at a rate of approximately 1 ml/min into the vessel, the operating pressure was maintained by adding additional TFE during the run. The temperature was controlled by a circulating water system on the jacket side of the reactor and conventional control elements. After 15 minutes reaction time, the TFE feed was shut off and the polymer suspension was removed from the bottom of the reactor. The polymer suspension was dried in a vacuum oven at 150° C for approximately 16 hours. The polymer was then weighed and characterized. The dry polymer weighed 50.1 g and had a melt viscosity of 2.40 x $10^3$ Pas (2.40 x $10^4$ poises) at 372° C. The molecular weight distribution index (MWDI) of the polymer was 1.14 and it contained 3.97% by weight of PPVE. The polymer was analyzed by Infrared Spectrophotometry and shown to contain the following unstable end groups per $10^6$ carbon atoms: 10 - COF, 68 $-CO_2H$, and 167 $-CH_2OH$.

Example 1 - Ethane Chain Transfer Agent

Using the procedure of Comparison Experiment 1, a similar run was made except that ethane was used as the chain transfer agent instead of methanol. The reaction vessel was charged with 820 ml "Freon" 113, 30.6 grams PPVE, and 0.63 grams of ethane added from a small cylinder attached to the reactor. The mixture was heated to 60° C under agitation and pressurized to 61 psig (420 kPa) with TFE. 3P initiator (25 ml, 0.002 g/ml) was pumped into the vessel to start the reaction. After the start of the reaction, 3P was pumped at a rate of 1 ml/min as in Comparison Experiment 1, and the TFE pressure was maintained at 61 psig (420 kPa) for a 15 minute reaction period. The dried polymer obtained from this run weighed 21 grams and had a melt viscosity of 11.8 x $10^3$ Pas (11.8 x $10^4$ poises) at 372° C. The MWDI was 1.17, and the polymer contained 3.29% by weight of PPVE. End group analysis showed 61 -COF ends per $10^6$ carbon atoms.

Example 2 - Propane Chain Transfer Agent

A polymerisation run was made the same as Example 1 except that propane (0.17 g) was used as the chain transfer agent and the clave pressure was maintained at 66 psig (455 kPa) with TFE for the 15 minute run. This run afforded 34.0 grams of polymer with a melt viscosity of 2.59 x $10^3$ Pas (2.59 x $10^4$ poises) at 372° C and a MWDI of 1.50. The polymer contained 3.20% by weight of PPVE and had end groups of 36 -COF and 47 $-CO_2H$ per $10^6$ carbon atoms.

Example 3 - Methane Chain Transfer Agent

A polymerization run was made the same as Example 2 except that methane (0.45 g) was used as the chain transfer agent and the clave pressure was maintained at 75 psig with TFE for the 15 minute run. This polymerization afforded 22.8 grams of polymer with a melt viscosity of 2.4 x $10^3$ Pas (2.4 x $10^4$ poises) at 372° C and a MWDI of 1.5. The polymer contained 4.05% by weight of PPVE and had end groups of 99 - COF per $10^6$ carbons.

Comparison Experiments 2-10
Using Other Hydrocarbon Chain Transfer Agents

A series of polymerizations was carried out using essentially the same procedure as described in Example 1. The autoclave was charged with "Freon" 113, PPVE and various hydrocarbon chain transfer agents. The ingredients and amounts used are summarized in Table I. The reaction mixtures were maintained at 60° C under the TFE pressures indicated. All polymerizations were started by pumping in 25 ml of dilute 3P (0.002 g/ml) solution in "Freon" 113. After the start of the reaction, dilute 3P (0.002 g/ml) was pumped into the autoclave at a rate of 1 ml/min for the 15 minute reaction period. The polymer was isolated as described in Example 1. Table I summarizes the polymer yields and properties for the various chain transfer agents tested. All such agents gave relatively high MWDI values.

TABLE I

TFE/PPVE POLYMERIZATIONS WITH HYDROCARBON CHAIN TRANSFER AGENTS

POLYMERIZATIONS: 15 MINUTES/60°C/0.09 G TOTAL 3P INITIATOR

| Comparison Sample Number | F-113 ML | PPVE Grams | Chain Transfer Agent (CTA) | CTA Grams | TFE Clave (PSIG) MPaG | Yield Grams | MV x10$^{-4}$ Poise (x10$^{-3}$ Pa s) | MWDI | PPVE % Wt | End Groups Number/10$^6$ Cs -COF | -COOH |
|---|---|---|---|---|---|---|---|---|---|---|---|
| 2 | 820 | 30.6 | Cyclopropane | 1.74 | (67) 0.46 | 42.7 | 43 | 3.7 | 3.90 | 40 | 18 |
| 3 | 820 | 30.6 | Butane | 0.09 | (67) 0.46 | 35.5 | 9.2 | 6.0 | 4.08 | 95 | 0 |
| 4 | 840 | 30.6 | t Butyl Cyclohexane | 0.20 | (66) 0.45 | 32.8 | 30 | 8.3 | 3.28 | 38 | 10 |
| 5 | 835 | 30.6 | Norborane | 0.075 | (66) 0.45 | 34.1 | 34 | 6.3 | 3.30 | 33 | 33 |
| 6 | 820 | 30.6 | Adamantane | 0.10 | (66) 0.45 | 25.6 | 2.0 | 8.4 | 3.50 | 48 | 40 |
| 7 | 820 | 30.6 | Cyclohexane | 0.10 | (66) 0.45 | 32.4 | 5.5 | 4.3 | 3.10 | NM | NM |
| 8 | 840 | 30.6 | Cyclopentane | 0.15 | (66) 0.45 | 28.5 | 4.2 | 7.2 | 2.95 | 43 | 0 |
| 9 | 840 | 30.6 | n-Hexane | 0.10 | (66) 0.45 | 26.0 | 28.3 | 11.0 | 3.39 | 0 | 70 |
| 10 | 840 | 30.6 | n-Pentane | 0.10 | (66) 0.45 | 25.7 | 27.3 | 4.5 | 2.98 | 37 | 31 |

NM = not measured

## Claims

1. A process for making a melt-processible tetrafluoroethylene copolymer with comprises polymerizing tetrafluoroethylene with at least one perfluoro(alkyl vinyl ether) comonomer of the formula $R_fO-CF=CF_2$

wherein $R_f$ is perfluoroalkyl of 1-6 carbon atoms, in a liquid organic solvent selected from perfluorinated solvents and chlorofluoroalkane solvents in which each carbon atom has at least one fluorine atom attached thereto, at a temperature of between 30° C and 75° C and at a pressure of between 0.1 and 6.9 MPa gauge (15 and 1000 psig) in the presence of a polymerization initiator and in the presence of a chain transfer agent, characterized in that the chain transfer agent is methane, ethane or propane.

2. A process according to Claim 1 wherein the liquid organic solvent is at least one of $CCl_2F_2$, $CCl_3F$, $CClF_2H$, $CCl_2FCCl_2F$, $CCl_2FCClF_2$ and $CClF_2CClF_2$, and the chain transfer agent is ethane.

3. A process according to Claim 1 or 2 wherein the comonomer is perfluoro(propyl vinyl ether).

4. A process according to Claim 3 wherein the solvent is $CCl_2FCClF_2$

5. A process according to any one of the preceding claims which comprises the additional step of melt-shaping the resulting copolymer.

**Revendications**

1. Un procédé pour fabriquer un copolymère de tétrafluoréthylène façonnable à l'état fondu, qui consiste à polymériser du tétrafluoréthylène avec au moins un comonomère qui est un perfluoro(éther d'alkyle et de vinyle) de la formule $R_fO\text{-}CF=CF_2$ où $R_f$ est un groupe perfluoroalkyle de 1 à 6 atomes de carbone, dans un solvant organique liquide choisi parmi les solvants perfluorés et les solvants du type chlorofluoroalcane dans lesquels au moins un atome de fluor est fixé à chaque atome de carbone, à une température comprise entre 30° C et 75° C et sous une pression comprise entre 0,1 et 6,9 MPa au manomètre (15 et 1000 psig), en présence d'un initiateur de polymérisation et en présence d'un agent de transfert de chaîne, caractérisé en ce que l'agent de transfert de chaîne est le méthane, l'éthane ou le propane.

2. Un procédé selon la revendication 1, dans lequel le solvant organique liquide est l'un au moins de $CCl_2F_2$, $CCl_3F$, $CClF_2H$, $CCl_2FCCl_2F$, $CCl_2FCClF_2$ et $CClF_2CClF_2$, et l'agent de transfert de chaîne est l'éthane.

3. Un procédé selon la revendication 1 ou 2, dans lequel le comonomère est le perfluoro(éther de propyle et de vinyle).

4. Un procédé selon la revendication 3, dans lequel le solvant est $CCl_2FCClF_2$.

5. Un procédé selon l'une quelconque des revendications précédentes, qui comprend l'étape supplémentaire de façonnage à l'état fondu du copolymère résultant.

**Patentansprüche**

1. Verfahren zur Herstellung eines schmelzverarbeitbaren Tetrafluorethylencopolymeren, bei dem Tetrafluorethylen mit mindestens einem Perfluor(alkylvinylether)-Comonomeren der Formel $R_fO\text{-}CF=CF_2$, worin $R_f$ Perfluoralkyl von 1-6 Kohlenstoffatomen ist, in einem flüssigen organischen Lösungsmittel, ausgewählt aus perfluorierten Lösungsmitteln und chlorfluoralkanlösungsmitteln, in denen jedes Kohlenstoffatom mindestens ein daran gebundenes Fluoratom hat, bei einer Temperatur zwischen 30° C und 75° C und einem Druck zwischen 0,1 und 6,9 MPa Manometerdruck (15 und 1000 psig) in Gegenwart eines Polymerisationsinitiators und in Gegenwart eines Kettenübertragungsmittels polymerisiert wird, dadurch gekennzeichnet, dass das Kettenübertragungsmittel Methan, Ethan oder Propan ist.

2. Verfahren nach Anspruch 1, worin das flüssige organische Lösungsmittel mindestens eines vor $CCl_2F_2$, $CCl_3F$, $CClF_2H$, $CCl_2FCCl_2F$, $CCl_2FCClF_2$ und $CClF_2CClF_2$ und das Kettenübertragungsmittel Ethan ist.

3. Verfahren nach Anspruch 1 oder 2, bei dem das Comonomere Perfluor(propylvinylether) ist.

4. Verfahren nach Anspruch 3, worin das Lösungsmittel $CCl_2FCClF_2$ ist.

5. Verfahren nach einem der vorhergehenden Ansprüche mit dem zusätzlichen Schritt der Schmelzverformung des erhaltenen Copolymeren.